# EUROPEAN PATENT SPECIFICATION

(11) **EP 0 480 929 B1**
(45) Date of publication and mention of the grant of the patent: **19.04.1995**
(21) Application number: 90902663.5
(22) Date of filing: 02.02.1990
(51) Int. Cl.: C03C 11/00, C04B 5/06, C21B 3/06

(54) **MANUFACTURE OF FOAM GLASS**
VERFAHREN ZUR HERSTELLUNG VON SCHAUMGLAS
FABRICATION DE VERRE MOUSSE

(30) Priority: 10.02.1989 GB 8903041
(43) Date of publication of application: 22.04.1992
(73) Proprietor: VERT Investments Limited, GB-Leeds LS1 1HQ (GB)
(72) Inventor: Mcneill, Keith Russel, Sheffield S6 4JG (GB)
(74) Representative: Brandon, Paul Laurence
(86) International application number: GB9000145
(87) International publication number: WO9009355

(56) References cited:
- EP-A- 0 242 872
- GB-A- 1 392 724
- GB-A- 1 442 854
- US-A- 3 126 274
- W. H. Manring, R. W. Hopkins, Glass Ind. 39, 139 (1958).
- Derwent's abstract No. 435 990 B/23, SU 618 352, publ. week 7923

## Description

This invention relates to a method of manufacturing foam glass.

Foam glass having a bulk density of approximately 0.2 and a relatively high mechanical strength is known as a good inorganic insulating material. The currently used methods of manufacturing foam glass employ activated carbon and produce a foam glass of an unattractive black appearance. The foam glass product also tends to be expensive.

According to the present invention there is provided a method of manufacturing foam glass which includes the step of contacting a molten glass composition containing iron with a carbide or nitride or oxynitride characterised in that the molten glass composition contains at least 0.2% by weight of FeO and sufficient sulphur to satisfy the Fe⁺⁺ ion, and has a negative redox value (determined in accordance with : W.H. Manring and R.W. Hopkins, Glass Ind. 39,139 (1958).) of at least -7, and in that iron is precipitated during the foaming process and a white or colourless foam glass is obtained.

The preferred material for contacting the molten glass composition is silicon carbide. It is already well known that the presence of small errant pieces of silicon carbide left over from "dressing" of aluminous refractory blocks during construction of a glass melting furnace will cause bubble in glass produced in that furnace. The pieces of silicon carbide appear to have indefinite life and the production of glass is ruined by the bubble appearance with the result that furnaces have had to be shut down while the pieces of silicon carbide are removed.

The present invention is based on the realisation that this property of silicon carbide may be utilized with an appropriate molten glass composition to produce violent bubble and a foam glass. Silicon oxynitride and commercially available silicon nitride, which contains the oxynitride as impurity, also have the same property, as do the carbides, nitrides and oxynitrides of other elements such as calcium and tungsten.

The glass compositions used in the process of the present invention are glass compositions which will give amber colouration. The amber colouration is produced by complex ions of iron oxide (FeO) and sulphur compounds, and it is thought that the process of the present invention proceeds as a result of the catalytic action of the carbide or oxynitride causing these complex ions to disintegrate with the sulphur ions taking up oxygen from the iron, and other metals more easily reduced than iron, thus releasing the metal, which is precipitated, and sulphur dioxide which is produced in large volume and foams the glass. At a temperature of 1500°C, 0.3% of SO₃ ion produces 5.4 cubic metres of gas per tonne of glass, each tonne of glass having a volume of 0.4 cubic metres.

Because the process of manufacturing foam glass in accordance with the present invention causes the precipitation of the iron or other metal, the process has application in the treatment of industrial slags, particularly steel slags in order to recover the metal, usually iron, which would otherwise be wasted. In these circumstances the commercial emphasis may be on the recovery of the metal with the formation of the foam glass as a useful by-product.

According to this aspect of the present invention therefore there is provided a method of recovering iron from a slag containing at least 10% by weight of Fe₂O₃ comprising the steps of adjusting the redox to a negative value of at least -7, adding sulphate to the slag, if necessary, to produce a vitreous slag having sufficient sulphur to satisfy the Fe⁺⁺ ion, contacting the vitreous slag with a carbide or nitride or oxynitride whereby a foam glass is formed with precipitation of iron, and recovering the precipitated iron.

The vitreous slag may be formed by adding sulphate to an industrial or domestic slag.

The process of the present invention may conveniently be carried out by dropping the molten glass composition or vitreous slag over a weir into a holding pot or crucible where it is stirred by a silicon carbide silicon nitride rod. The foam glass is taken off by a platinum or other forehearth to machines where the foam glass may be moulded, blown, pressed, spun or simply dropped into water to provide a multiplicity of products. When the foam glass product is pressed, the density of the final product can be varied depending on the mould size, the volume of foam and the depth to which a press is moved into the mould.

As an alternative to stirring the molten glass composition or vitreous slag with a silicon carbide/nitride rod, the molten glass composition or vitreous slag may be passed over a portion of a furnace constructed from silicon carbide, for example a material consisting of, by weight 70% silicon carbide, 30% silicon nitride. The molten glass composition or vitreous slag may be passed over a forehearth or down a spout made of silicon carbide, silicon nitride, silicon oxynitride, or other refractory carbide, nitride or oxynitride.

As a further alternative, the present invention may be performed by sprinkling an appropriate carbide, nitride or oxynitride, preferably silicon carbide or silicon oxynitride, in powder form on the molten glass composition or vitreous slag in the furnace. Foam glass will then be obtained as the output from the furnace.

The present invention will be further understood from the following examples of preferred methods in accordance therewith.

### Example 1

Equal quantities by weight of a fly ash from a coal fired power station (P.F.A.) and of limestone were melted together in a crucible at a temperature of 1500°C for eight hours. A very dark amber coloured glass was produced and was found to contain approximately 1% by weight of Fe₂0₃. This molten glass was stirred with a rod consisting of 70% silicon carbide and 30% silicon nitride. The glass foamed so much that the density was reduced to less than 0.2 gms/cc. Analysis of the foam glass showed that the iron content (Fe₂0₃) had been reduced to less than 0.04% and the foam glass obtained was colourless.

An alloy of iron and chromium (picked up from the refractories) was found on the base of the crucible. The rod of silicon carbide and silicon nitride was unaffected by the reaction which took place in the crucible.

Analysis of the fly ash used in this process showed that the fly ash contained sulphate and carbon and gave an 8% loss on ignition. The quantities of sulphate and carbon present were therefore such as to produce a high negative redox in the dark amber glass.

### Example 2

66kg of calcium sulphate and 30kg of carbon were added to 1 tonne of steel slag containing a high iron oxide concentration (approximately 20% by weight Fe₂0₃) and stirred in with a silicon carbide/silicon nitride rod. A white foam glass was obtained with precipitation of iron which was recovered as metal. The white foam glass was suitable for use as a cement.

Foam glass products obtained by methods in accordance with the present invention may be used as building blocks for heat, sound or fire protection, for insulation purposes at high or low temperature, or as a refractory material.

In the preferred process in accordance with the present invention the raw materials used are waste matter from industrial processes which are cheap, and the present invention therefore provides foam glass at a low price compared with the foam glass currently available. Furthermore the foam glass is white or colourless and has a more pleasing appearance than the foam glass which is currently available.

## Claims

1. A method of manufacturing foam glass which includes the step of contacting a molten glass composition containing iron with a carbide or nitride or oxynitride characterised in that the molten glass composition contains at least 0.2% by weight of FeO and sufficient sulphur to satisfy the Fe⁺⁺ ion, and which has a negative redox value (as defined in the description) of at least -7 (i.e. ≦ -7), and in that iron is precipitated during the foaming process and a white or colourless foam glass is obtained.

2. A method according to Claim 1 characterised in that the molten glass composition is contacted with the carbide or nitride or oxynitride at a temperature of the order of 1500°C.

3. A method according to Claim 1 or Claim 2 characterised in that the molten glass composition is contacted with silicon carbide.

4. A method according to any one of the preceding Claims characterised in that the molten glass composition is stirred with a rod comprising, by weight, 70% silicon carbide and 30% silicon nitride.

5. A method according to any one of Claims 1 to 3 characterised in that the molten glass composition is caused to pass over a portion of a furnace constructed from silicon carbide.

6. A method according to Claim 5 characterised in that the portion of the said furnace is constructed from a material consisting of, by weight, 70% silicon carbide, 30% silicon nitride.

7. A method according to any one of Claims 1 to 3 characterised in that silicon carbide in powder form is sprinkled on the surface of the molten glass composition.

8. A method according to any one of the preceding Claims characterised in that the molten glass composition is a vitreous slag formed by adding sulphate to an industrial or domestic slag.

9. A method according to any one of the preceding Claims characterised in that the molten glass composition is a vitreous slag formed by adding sulphate and carbon to a steel slag.

10. A method according to any one of Claims 1 to 6 characterised in that the molten glass composition is formed by heating fly ash with an equivalent quantity of limestone at 1500°C.

11. A method of recovering iron from an industrial waste material by a method according to any one of the preceding claims and including the further step of recovering precipitated iron.

12. A method. of recovering iron from a slag containing at least 10% by weight of Fe₂O₃ comprising the steps of adjusting the redox (as defined in the description) to a negative value of at least -7 (i.e. ≦ -7), adding sulphate to the slag, if necessary, to produce a vitreous slag having sufficient sulphur to satisfy the Fe⁺⁺ ion, contacting the vitreous slag with a carbide or nitride or oxynitride whereby a foam glass is formed with precipitation of iron, and recovering the precipitated iron.

## Patentansprüche

1. Verfahren zum Herstellen von Schaumglas, das den Schritt umfaßt, daß eine geschmolzene Glaszusammensetzung, die Eisen enthält, mit einem Carbid oder Nitrid oder Oxynitrid in Kontakt gebracht wird, dadurch gekennzeichnet, daß die geschmolzene Glaszusammensetzung mindestens 0,2 Gewichts-% FeO und ausreichend Schwefel für das Fe⁺⁺-Ion enthält, und daß sie einen negativen Redoxwert (wie er in der Beschreibung definiert worden ist) von mindestens -7 (d. h. ≦ -7), aufweist, und daß Eisen während des Schäumvorgangs ausgefällt wird und man ein weißes oder farbloses Schaumglas erhält.

2. Verfahren nach Anspruch 1, dadurch gekennzeichnet, daß die geschmolzene Glaszusammensetzung bei einer Temperatur in der Größenordnung von 1500 °C mit dem Carbid oder Nitrid oder Oxynitrid in Kontakt gebracht wird.

3. Verfahren nach Anspruch 1 oder Anspruch 2, dadurch gekennzeichnet, daß die geschmolzene Glaszusammensetzung mit Siliziumcarbid in Kontakt gebracht wird.

4. Verfahren nach einem der vorhergehenden Ansprüche, dadurch gekennzeichnet, daß die geschmolzene Glaszusammensetzung mit einem Stab gerührt wird, der 70 Gewichts-% Siliziumcarbid und 30 Gewichts-% Siliziumnitrid umfaßt.

5. Verfahren nach einem der Ansprüche 1 bis 3, dadurch gekennzeichnet, daß die geschmolzene Glaszusammensetzung über einen Teil des Ofens geleitet wird, der aus Siliziumcarbid hergestellt ist.

6. Verfahren nach Anspruch 5, dadurch gekennzeichnet, daß der Teil des Ofens aus einem Material hergestellt ist, das aus 70 Gewichts-% Siliziumcarbid, 30 Gewichts-% Siliziumnitrid besteht.

7. Verfahren nach einem der Ansprüche 1 bis 3, dadurch gekennzeichnet, daß pulverförmiges Siliziumcarbid auf die Oberfläche der geschmolzenen Glaszusammensetzung gesprüht wird.

8. Verfahren nach einem der vorhergehenden Ansprüche, dadurch gekennzeichnet, daß die geschmolzene Glaszusammensetzung eine glasige Schlacke ist, die durch Zugabe von Sulfat zu einer Industrie- oder Hausschlacke gebildet wird.

9. Verfahren nach einem der vorhergehenden Ansprüche, dadurch gekennzeichnet, daß die geschmolzene Glaszusammensetzung eine glasige Schlacke ist, die durch Zugabe von Sulfat und Kohlenstoff zu einer Stahlschlacke gebildet wird.

10. Verfahren nach einem der Ansprüche 1 bis 6, dadurch gekennzeichnet, daß die geschmolzene Glaszusammensetzung durch Erwärmen von Flugasche mit einer äquivalenten Menge Kalk bei 1500 °C gebildet wird.

11. Verfahren zum Wiedergewinnen von Eisen aus Industrieabfallstoffen durch ein Verfahren nach einem der vorhergehenden Ansprüche, das den weiteren Schritt der Wiedergewinnung des ausgefällten Eisens einschließt.

12. Verfahren zum Wiedergewinnen von Eisen aus einer Schlacke, die mindestens 10 Gewichts-% Fe₂O₃ enthält, umfassend die Schritte Einstellen des Redox-Wertes (wie in der Beschreibung definiert) auf einen negativen Wert von mindestens -7 (d. h. ≦ -7), falls notwendig, Zugabe von Sulfat zu der Schlacke, um eine glasige Schlacke herzustellen, die ausreichend Schwefel für das Fe⁺⁺-Ion aufweist, In-Kontakt-Bringen der glasigen Schlacke mit einem Carbid oder Nitrid oder Oxynitrid, wobei unter Ausfällen von Eisen ein Schaumglas gebildet wird, und Wiedergewinnen des ausgefällten Eisens.

## Revendications

1. Procédé de fabrication de verre mousse comprenant l'opération de mettre une composition de verre fondu, contenant du fer, en contact avec un carbure, un nitrure ou un oxynitrure, caractérisé en ce que la composition fondue contient au moins 0,2 % en poids de FeO et une quantité de soufre suffisante pour satisfaire l'ion Fe⁺⁺, et a une valeur redox négative, telle que définie dans la description, d'au moins -7, c'est-à-dire ≦ -7, en ce que le fer est précipité au cours du processus de moussage, et en ce qu'un verre mousse blanc ou incolore est obtenu.

2. Procédé suivant la revendication 2, caractérisé en ce que la composition fondue est mise en contact avec le carbure, le nitrure ou l'oxynitrure à une température de l'ordre de 1500 °C.

3. Procédé suivant la revendication 1 ou 2, caractérisé en ce que la composition fondue est mise en contact avec du carbure de silicium.

4. Procédé suivant l'une quelconque des revendications précédentes, caractérisé en ce que la composition fondue est agitée avec une barre comprenant, en poids, 70 % de carbure de silicium et 30 % de nitrure de silicium.

5. Procédé suivant l'une quelconque des revendications 1 à 3, caractérisé en ce que la composition de verre fondu est amenée à passer dans une partie d'un four fabriquée en carbure de silicium.

6. Procédé suivant la revendication 5, caractérisé en ce la partie précitée du four est fabriquée dans une matière contenant, en poids, 70 % de carbure de silicium, et 30 % de nitrure de silicium.

7. Procédé suivant l'une quelconque des revendications 1 à 3, caractérisé en ce que du carbure de silicium pulvérulent est diffusé à la surface de la composition de verre fondu.

8. Procédé suivant l'une quelconque des revendications précédentes, caractérisé en ce que la composition fondue est un laitier vitreux produit en ajoutant du sulphate à un laitier d'origine industrielle ou ménagère.

9. Procédé suivant l'une quelconque des revendications précédentes, caractérisé en ce que la composition fondue est un laitier vitreux produit en ajoutant du sulphate et du carbone à des scories d'aciérie.

10. Procédé suivant l'une des revendications 1 à 6, caractérisé en ce que la composition fondue est produite en chauffant des cendres volantes avec une quantité équivalente de pierre à chaux à 1500 °C.

11. Procédé de récupération de fer à partir de déchets industriels par un procédé conforme à l'une quelconque des revendications précédentes, et comprenant l'opération supplémentaire de récupérer le fer ayant précipité.

12. Procédé de récupération du fer à partir d'un laitier contenant au moins 10 % en poids de Fe₂O₃, comprenant les étapes consistant à ajuster la valeur redox, telle que définie dans la description, sur une valeur négative d'au moins -7, c'est-à-dire ≦ -7, à ajouter le cas échéant du sulphate au laitier, de manière à produire un laitier vitreux contenant suffisamment de soufre pour satisfaire l'ion Fe⁺⁺, à mettre le laitier vitreux en contact avec un carbure, un nitrure ou un oxynitrure, de manière à provoquer la formation d'un verre mousse accompagnée d'une précipitation du fer, et à récupérer le fer ayant précipité.
